(19) Europäisches Patentamt / European Patent Office / Office européen des brevets

(11) **EP 4 299 545 B1**

(12) **EUROPEAN PATENT SPECIFICATION**

(45) Date of publication and mention
of the grant of the patent:
**10.09.2025 Bulletin 2025/37**

(21) Application number: **23182512.6**

(22) Date of filing: **29.06.2023**

(51) International Patent Classification (IPC):
**C04B 20/02** (2006.01)   **C04B 28/02** (2006.01)

(52) Cooperative Patent Classification (CPC):
(C-Sets available)
**C04B 20/026; C04B 28/02**   (Cont.)

(54) **CEMENTITIOUS POWDER, METHOD OF PREPARATION AND USE THEREOF**

ZEMENTPULVER, VERFAHREN ZU SEINER HERSTELLUNG UND VERWENDUNG

POUDRE CIMENTAIRE, SON PROCÉDÉ DE PRÉPARATION ET SON UTILISATION

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **29.06.2022 EP 22182068**

(43) Date of publication of application:
**03.01.2024 Bulletin 2024/01**

(73) Proprietor: **Etex Services NV
1880 Kapelle-op-den-Bos (BE)**

(72) Inventors:
• **MAREELS, Joyce
1840 Londerzeel (BE)**
• **WANTE, Steven
9240 Zele (BE)**

(74) Representative: **Etex Services NV - Etex IPSC
Kuiermansstraat 1
1880 Kapelle-op-den-Bos (BE)**

(56) References cited:
**JP-A- 2002 273 258**

(52) Cooperative Patent Classification (CPC): (Cont.)

C-Sets
**C04B 20/026, C04B 18/167;**
**C04B 28/02, C04B 18/167**

**Description**

FIELD OF THE INVENTION

The invention relates to a cementitious powder comprising organic fibers and cured cement, which cementitious powder is obtained from recycling.

The invention also relates to a method of preparation such cementitious powder comprising the steps of providing fiber cement waste material comprising fibers and comminuting said fiber cement waste material resulting in cementitious particles and fibers, wherein at least part of said fibers are removed.

The invention further relates to the use of such a cementitious powder for the manufacture of fiber cement or concrete.

BACKGROUND OF THE INVENTION

Fiber cement is an important building material. Whereas asbestos fibers were used in the past, these have been replaced by carbon-based fibers for well-documented health reasons. Cellulose fibers are a much-used type of carbon-based fibers applied in the fabrication of fiber cement products, for example in autoclave-cured fiber cement products. Other types of carbon-based fibers include polyvinyl alcohol (PVA) fibers and polypropylene (PP) fibers, which are commonly used in air-cured fiber cement. Polyethylene (PE) fibers may also be used in combination with any of the above. Most fiber cement products have a density of at least 1.2 kg/dm3, and have been prepared as a series of thin layers that are laminated into a green sheet following by a curing process. Such a structure is for instance obtained by using the Hatschek manufacturing process. The resulting fiber cement products are characterized by high compressive strength.

Waste fiber cement material is available in large quantities, not only from used and replaced products, but also and even primarily as a by-product from the production techniques of new products, such as the cutting of newly produced fiber cement panels. Therefore, recycling of such waste fiber cement material has been investigated before. In order to be feasible for reuse, the waste material, typically in the form of plates or larger pieces, is to be crushed first and then to be pulverized. However, fiber cement is a composite material, and it is a challenge to generate a cementitious powder therefrom that can be effectively reused.

One known approach relates to the removal of at least part of the fibers in the fiber cement product. According to JP2002-273258A1, one could subject the material first to volume pulverization. As the organic fibers have little pulverizing action in the volume pulverizer, the fiber length is relatively maintained at several hundred $\mu$m. The fibers could be removed thereafter, by using a difference is specific gravity, particularly in an air-classifier. Therein, a separation is made between an air-flow in which fibers are dispersed and a powder with a significantly reduced fiber content. Thereafter, this powder is subjected to wet pulverization so as to arrive at a powder with a median particle size in the range of 1-2 $\mu$m. Such a powder would have pozzolanic properties, i.e. it could be used as a micro-filler or as a strength-improvement additive, when amorphous silica and/or crystalline silica are included. However, such an ultrafine powder is not beneficial when returned to a fibre cement manufacturing process such as the Hatschek process. In fact, the small size results therein that the material passes the sieves and is therefore not adsorbed on the sieve to form a thin film.

JP2004-217482A1 discloses a method wherein the resulting powder has a particle size (median diameter) in the range of 10-35 $\mu$m. The waste material is therein treated in a primary pulverization step with a hammer mill, which is followed by a secondary crushing step with a roller mill. The material is then subjected to air classification, and fiber components are removed by a sieve after air classification. No further details are disclosed for the method. The resulting powder is used for manufacture of a low-density product, with a density between 1.0 and 1.1 kg/dm3. Thereto, a slurry comprising cement, fly ash, silicone stone and short and long fiber pulp (i.e. cellulose) and 5% of the recycled powder was prepared into a sheet. The excavated sheet was pressure-molded at 3 MPa, and thereafter first pre-cured and then autoclave-cured. However, low-density products are typically used for ceilings. They do not have the required performance for façade panels, flooring applications and/or roofing applications, for which medium- and high-density boards are used. The reported tensile strength is in the range of 4.5-5.3 MPa, which is well below the requirements for façade panels, flooring applications and/or roofing applications. It is furthermore not apparent from the data that the recycled material could be used for more demanding applications.

In fact, JP2006-23624A1 is a subsequent patent publication from the same inventors, which includes comments on the product quality of the recycled powder disclosed in JP2004-217482A1. It is stated in [0005] that the fiber component and the solid component are often in an entangled state in the pulverized product, and that it is difficult to separate them completely. This would lead to an apparently large particle size due to the protrusion of the organic fibers. As a consequence, the particle size of the pulverized product varies, and the desired performance is imparted to the newly made product including same pulverized product ([0006]). The disclosed solution to this product resides in subjecting the pulverized product to a heat treatment for burning and removing the organic fibers ([0016]). This solution evidently has other disadvantages, including use of energy, treatment of air including any removal products, as well as potential changes to the cement matrix due to the exposure to a high temperature, preferably in the range of 450 to 500°C. It is known that hardened (air-cured) cement looses hydratation water with increasing temperature. Calcium hydroxide for instance looses its hydratation water from 400°C onwards. Furthermore, the Calcium hydroxide and Calcium Silicate Hydrates (CSH) may degrade, leading to loss of strength. For air-cured fiber cement such CSH includes $2CaO.SiO_2$. For autoclave-cured fiber cement, the CSH for instance includes tobermorite.

As a consequence, there is a need for an improved cementitious powder resulting from recycling of fiber cement waste, for instance for reuse into medium-density and high-density fiber cement products. It should furthermore be suitable for a feed that predominantly consists of high-density fiber cement material.

## SUMMARY OF THE INVENTION

It is therefore a first object of the invention to provide a cementitious powder of the type mentioned in the opening paragraph.

It is a second object of the invention to provide a method of preparing such a cementititous powder. And it is a further object to provide use of the cementitious powder.

According to a first aspect, the invention provides a cementitious powder comprising organic fibers in an amount of 1-2% by weight as defined by an organic carbon content, wherein said cementitious powder is a cured powder comprising calcium hydroxide and/or calcium silicate hydrates (CSH) in an amount of at least 5% by weight. Furthermore, said cementitious powder provided with a particle size distribution such that at least 90 % by weight (d90) is smaller 100 $\mu$m, a median (d50) is in the range of 10-40 $\mu$m. Moreover, said organic fibers have an arithmetic average length (L(n)) in the range of 0.25 mm to 0.50 mm, preferably in the range of 0.30 mm to 0.45 mm.

According to a second aspect, the invention provides a method of manufacturing such a cementitious powder comprising the steps of: providing fiber cement waste material comprising fibers; comminuting said fiber cement waste material resulting in cementitious particles and fibers, and removing part of said fibers from said comminuted fiber cement waste material by sieving. Preferably, the fibers are merely cut in the comminution process, resulting in fibers with a reduced fiber length.

According to a third aspect, the invention relates to the use of the cementitious powder for the manufacture of fiber cement or concrete, wherein the cementitious powder is preferably used in an amount of at least 7 weight% based on dry weight, more preferably at least 10 weight%, more preferably at least 15 weight%, for instance in the range of 15-40 weight%.

It has been found by the inventors in experiments leading to the present invention, that a cementitious powder comprising cured cement particles and organic fibers with an average length between 250 and 500 $\mu$m and especially between 300 and 450 $\mu$m, as well as a reduced content of organic fibers can be effectively reused. First of all, the limited fiber length prevents clogging. Hence, the cementitious powder may be removed without flowability issues from a silo container. Furthermore, the cementitious powder comprising both the fibers of limited length and the cementitious particles is well dispersible and thus leads to a uniform distribution of the recycled material through a fresh cement composition. Additionally, the cementitious powder may be prepared in an efficient manner from waste material. In the context of the invention, a reduced organic content of at most 2 weight% based on total carbon content is a reduced content relative to conventional fiber cement material comprising 8-12% by weight organic fibers (based on total dry weight of the fiber cement composition). 1% by weight of total carbon content corresponds to approximately 2.5% by weight based on total dry weight of the fiber cement composition.

In an advantageous embodiment, said organic fibers have a polydispersity in the range of 1.05-1.25, preferably 1.10-1.20. The low polydispersity of the fibers in the resulting cementitious powder was a surprise detected in characterisation test and is useful for the reuse of the cementitious powder. In fact, it implies that the powder neither comprises fibers with a very small fiber length, which would just contaminate process water, nor fibers with a much larger than average fiber length, which could lead to a risk of clogging.

Beyond the total content, the fiber length of the fibers is deemed highly relevant for appropriate flowability.

According to the invention, the median (d50) of the particles of the cementitious powder is in the range of 10-40 $\mu$m, preferably 15-35 $\mu$m, more preferably 20-30 $\mu$m. For the avoidance of doubt, the particle size distribution is determined with laser diffraction, using equipment supplied by Malvern Pananalytical and known as MastersizerTM 3000. In this manner, the cementitious powder has a size that corresponds very well to the size of fresh raw materials used in the manufacture of cement products, such as Portland cement and quartz. In a further implementation, the cementitious powder has a particle size distribution such that at least 90 % by weight (d90) is smaller 100 $\mu$m.

Furthermore, it is advantageous that the cementitious powder comprising a median size of the particles of this implementation and the specified average fiber length with the preferred polydispersity could be achieved from waste material. It is believed that this is due to a process wherein the waste is first treated to crushed material, and thereafter is ground, with larger fibers being sieved off, for instance through a sieve in the range of 100-200 $\mu$m mesh, such as 150 $\mu$m mesh.

In a preferred embodiment, the content of calcium hydroxide and/or calcium silicate hydrates is at least 10% by weight. The said content of both calcium hydroxide and calcium silicate hydrates will be hereinafter referred to as CSH content. The CSH content is more preferably at least 10% by weight, by further preference at least 15% by weight. The CSH content may even be at least 20% by weight. It may also be higher, such as at least 30% by weight or even 45% by weight. In fact, the CSH content is related to the CSH content in the fiber cement waste material. Due to the removal of fibers, the CSH content will even be higher in the cementitious powder than in the fiber cement waste material. The CSH content may be determined by means of X-ray diffraction analysis (XRDA).

Generally, fiber cement is cured in two different manners, namely air-cured and autoclave cured. As a consequence, the CSH content is distinct. In cementitious powder obtained from air-cured waste material, the CSH content is primarily in the form of calcium hydroxide, typically crystalline, and CSH-gel. As known to a skilled person, a CSH-gel is a material comprising crystallites which however behaves as a gel. In cementitious powder obtained from autoclave-cured waste material, the CSH content will be at least partially in the form of tobermorite, and especially so called 11A-tobermorite which is deemed to be most important CSH-phase for strength development.

In another embodiment of the invention, the cementitious powder is an autoclave-cured powder as obtainable from fiber cement waste and comprises tobermorite, and particularly so-called 11A-tobermorite. Beyond tobermorite other calcium silicate hydrates may be present, which may be semi-crystalline in nature. In this embodiment, the organic fibers are usually only cellulose fibers.

Hence, in one embodiment of the invention, the cementitious powder is an air-cured powder and comprises calcium hydroxide and CSH gel an as the primary CSH. In this embodiment, the organic fibers may comprise synthetic fibers such as polyvinyl alcohol (PVA), polyethylene (PE) and polypropylene (PP) fibers. In this embodiment, the CSH-content is preferably between 40 and 80% by weight, more preferably between 45 and 60% by weight. Typically, the CSH content is roughly 75% ofS the initial content of Portland cement (based on total dry weight) in the fiber cement composition of the air-cured powder.

In addition to CSH content and fibers, the cementitious material may comprise additional ingredients of any fiber cement product. For an air-cured cementitious powder, this may include one or more of cement, such as Portland cement, for instance Portland cement type I (to the extent that this cement was not fully hydrated), calcium carbonate, amorphous silica, other conventional fillers and additives and/or any pigment. For an autoclave-cured cementitious powder, this may further include one or more of SiO2, such as crystalline silica, calcium silicate (such as wollastonite and/or perlite), a source of alumina, such as kaolin, metakaolin, aluminium trihydroxide (ATH) to the extent that this has not been converted into a calcium silicate hydrate.

Preferably, the cementitious powder comprising autoclave-cured cementitious particles has a tobermorite content of between 10 and 40% by weight based on the total dry weight of the cementitious powder. More preferably, the tobermorite content is between 15 % and 35 % by weight, such as between 20% and 30% by weight or between 22 and 27% by weight. If the tobermorite content is too low, the cementitious powder is not very reactive in nature, and hence merely acts as a filler instead of being able to replace fresh cement. If the tobermorite content is too high, a fiber cement product made therewith may become more brittle. The total calcium silicate hydrate content of the cementitious powder comprising autoclave-cured cementitious particles is preferably in the range of 30 to 50% by weight. However, this clearly depends as well on the relative amount of the cementitious powder that is added into a (fiber) cement composition.

The cementitious powder turns out useful for reuse for fiber cement. Tests have shown that the normalized strength increases in comparison to fiber cement of a corresponding composition without recycled fiber cement. In comparison to fiber cement that was comminuted in line with the process of the invention, but from which the fibers were not removed by sieving, the invention leads to products with a higher Young's modulus, and elastic behaviour up to a higher level. Furthermore, in comparison to recycled material from which no fibers were removed and/or which were treated with a ball mill rather than with the method of the invention, the distribution is improved. Earlier investigations indicated that a fiber cement product manufactured with a composition including recycled material, in accordance with the Hatschek process, may comprise white spots throughout the product. With the cementitious powder of the invention, this issue is reduced or even completely solved.

A preferred concentration of the cementitious powder into a fiber cement composition for manufacturing fiber cement is for instance in the order of 10% to 50% by weight based on the total dry weight of the fiber cement composition. When used in fiber cement compositions configured for generation of medium- and high-density panels (with a density of at least 1.2 kg/dm$^3$ and 1.5 kg/dm$^3$ respectively), such as used for façade panels, roofing applications and decking applications, a preferred concentration is for instance 10%-30% by weight, such as 15% -25% by weight (based on the total dry weight of the fiber cement composition). Herein, the cementitious powder may be primarily (at least for 2/3) used to replace fresh cement and/or fresh SiO2 (especially quartz). When used in fiber cement compositions for lower density products, typically used as building boards, the concentration may be 20% - 50% by weight. It can then be used, for instance, furthermore to replace any low-density filler such as perlite.

Preferred manufacturing methods for fiber cement products include Magnani process, extrusion process, flow-on process and the Hatschek process. The Hatschek process is most preferred. More preferably, the cementitious powder is used for the production of fiber cement products, such as fiber cement sheets, with a medium-density or a high density. A medium density fiber cement product is specified as a product with a density in the range of 1.2-1.5 g/cm3. A high density product has a density of at least 1.5 g/cm3, typically 1.5-2.0 g/cm3.

The cementitious powder further turns out advantageous for use in the production of concrete. Herein, the CSH-content may contribute to additional strength. Furthermore, due to the removal of a significant portion of the fibers, the water demand decreases when reusing this powder for concrete manufacturing. Again, the dispersibility of the cementitious powder herein serves to use it industrially.

The cementitious powder is suitably used in an amount of at least 7 weight%, for instance 10-20 weight% such as the 15 weight% of the illustrated examples. It is however not excluded that the cementitious powder is used in larger amounts for instance from above 20-50 weight%.

The cementitious powder is preferably generated in a process that comprises

- Providing fiber cement waste material comprising fibers;
- Comminuting said fiber cement waste material resulting in cementitious particles and fibers, and
- Removing part of said fibers from said comminuted fiber cement waste material by sieving.

In the comminution step, the fibers of the initial fiber cement waste material will be subdivided or cut. The term 'cut' used herein specifies that the fibers of the fiber cement material are not comminuted like the cement in the fiber cement waste material, but rather being retained with a reduced length. Preferably, a single fiber is cut between 1 and 10 times, preferably between 2 and 6 times.

In a preferred implementation, the comminution step comprises a pre-treatment to transform the waste material into crushed material, and thereafter the use of a vertical roller mill provided with an air classifier. A vertical roller mill treats material by means of grinding between rollers. Herein, the grinding pressure may be specified. Moreover, the size of the fibers will not be reduced as much as the size of the cement material. This leads thereto that part of the fibers can be separated from the cementitious particles by means of sieving. The removed part will depend on the mesh of the sieve. The inventors believe, based on the small polydispersity of the fiber lengths of the fibers in the cementitious powder, that the fibers are cut in the vertical roller mill. It is not excluded or even likely that fibers will further be cut in the pre-treatment, for which any impact-based technique such as a hammer mill, a shredder, a ball mill, may be applied.

In a further implementation the vertical roller mill and the air classifier are present in a milling chamber that is heated, preferably through flow of heated gas, such as heated air. In this manner, the ground material gets dried during its residence in the milling chamber. This drying of the ground material has been found effective to ensure separation of the fibers and the cementitious particles. Moreover, drying is relevant to ensure efficient and effective sieving. Passing the air classifier, which operates as a centrifuge, may aid in obtaining said separation of the fibres from the cementitious particles. Investigations of the resulting cementitious powder by means of optical analysis (microscope and the like) have shown that most fibers, if not all fibers, are liberated from the cementitious particles. Most may herein be understood as at least 90% by weight based on the total weight of the fibers. In one specific implementation the milling chamber was heated to a temperature in the range of 70-90°C. Herein, the air flow itself was brought to a higher temperature. That is found to provide heat for sufficient drying within the residence time of the ground material in the milling chamber.

In one embodiment, the method comprises providing millimetre-sized granules originating from waste fiber cement material. The granules are supplied to an apparatus with a vrertical roller mill comprising a rotating horizontal grinding track and one or more rollers configured to rotate about stationary rotation axes, wherein the granules are ground between the grinding track and a lateral surface of the rotors, and are reduced to agglomerates comprising micrometre-sized particles. Separation of these particles from the fibers occurs after drying in the milling chamber of the apparatus during an upward air flow. Said smaller-sized particles together with (the light-weight) predominantly or fully cement-free fibers are separated from heavier particles in an air classifier. Following this, the smaller-sized particles are separated from the majority of the cement-free fibers in a sieve, and obtained as the end product, which is a cementitious powder with very low fiber concentration.

In a further advantageous embodiment of the invention, the crushed material has a particle size (as defined by a median diameter) in the range of 2 mm to 10 cm, preferably in the range of 3 mm to 5 cm, such as in the range of 5 mm to 3 cm. In this manner, the particle size of the crushed material is such that the fibers remain predominantly within the individual pieces of the crushed material. Hence, the crushing does not reduce the length of the fibers more than necessary to reach appropriate feed for the vertical roller mill.

In one preferred implementation, the method further comprises the step of crushing waste material into crushed material prior to the communition and fiber separation. The in-situ crushing of waste material provides the benefit that some detection steps may be performed, so as to remove undesired or harmful elements. Additionally, this ensures that the crushed material has the preferred size as specified hereinabove. In an even further implementation, the step of crushing waste material comprises a first step to break down waste material into lumped material and a second step to break down said lumped material into crushed material. The first step may for instance be performed by means of a shredder. The second step may further instance be performed by means of a hammer mill, although other known milling techniques are not excluded. As used herein, lumped material is material that has a macroscopic size, for instance a diameter in the range of 5 to 25 cm, such as 10 to 15 cm. It will be understood that the exact size is not relevant here. However, the material should be appropriate as feed for the mill used in the second step.

In again a further embodiment, the air classifier is a gravitational air classifier. Herein, coarse particles are conveyed by gravity through a valve at the bottom of the air classifier, and fine material is conveyed by air to a fabric filter. The air classifier may have an internal chamber, from which coarser material is rejected by means of the centrifugal force into an annular gap. This would allow then to be flow down. However, under this force, further fibers may be liberated from the cementitious particles without falling back into the vertical mill and being milled down. The size of the coarser material to be rejected is for instance in the range of 100-200 $\mu$m, such as 130-170 $\mu$m, for instance 125 $\mu$m or 150 $\mu$m. This size may be set by means of a classificiation point.

Furthermore, a composition of the cementitious powder obtained in this manner by comminution and sieving (wherein the comminution is preferably performed by using a vertical roller mill and a drying treatment to separate cementitious particles from fibers), may be further modified by mixing said obtained cementitious powder with any further cementitious powder. Such further cementitious powder may comprise cured cement particles obtained from a different source than fiber cement, such as concrete or cement mortar or dried out cement paste. Such further cementitious powder may further be a cementitious powder obtained from fiber cement but with a different composition, and/or wherein different settings have been used in the method resulting in a powder with different fiber content, different average fiber length and/or different size distribution of the cementitious particles. Additionally, the composition of the cementitious particles may be distinct. For instance, it may be useful to mix a cementitious powder comprising autoclave cured cementitious particles with a cementitious powder comprising air-cured cementitious particles. It is an advantage of the cementitious powder in accordance with the invention having the specified fiber length that such mixing with other powders may be effective to obtain a powder with a homogeneous distribution.

## Brief description of the figures

These and other aspects of the cementitious powder, its preparation method and its use will be further elucidated with reference to the Figure and the Examples. It is observed for sake of completeness that any preferred embodiment or implementation discussed hereinabove and/or specified in one or more of the dependent claims is applicable to all aspects of the invention, even when not explicitly specified so for sake of brevity. Herein,

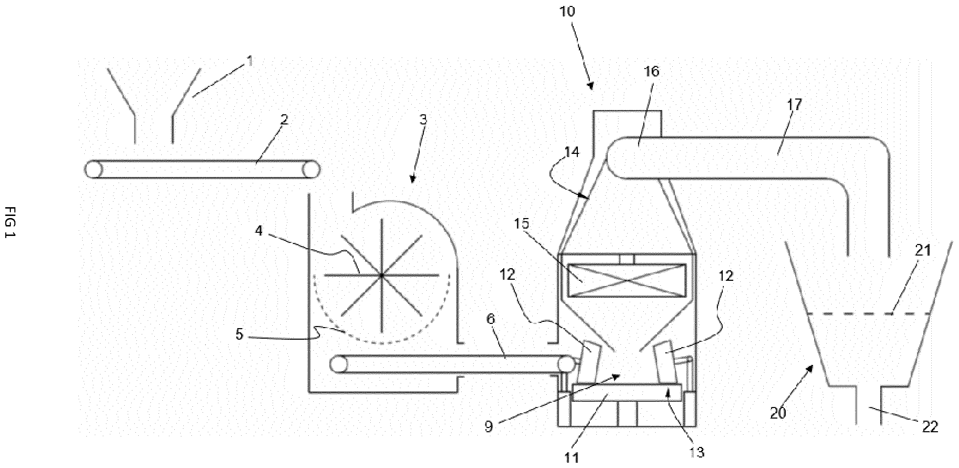

Figure 1 is a conceptual illustration of the various stages of the method according to an embodiment of the invention. The drawing also provides a schematic image of the main components of an installation according to embodiments of the invention.

## Detailed description of preferred embodiments of the invention

The steps of the method of the invention will be described hereafter in more detail, including possible alternatives included in the protection scope and preferred ranges for a number of parameters. None of the stated details however defines the protection scope unless they are stated also in the independent claims.

The step of crushing raw fiber cement pieces into crushed material granules may be performed in two stages depending on the size of the raw material pieces. In most cases, these pieces will be large to the extent that a shredding stage is required to reduce the material to pieces whose largest dimension is about a few centimetres to 20 cm, hence the term 'centimetre-sized', or lumped material. A shredder installation as known in the art may be used for this purpose.

With reference to Figure 1, a supply of such lumped material is loaded into a hopper 1 or any other equivalent supply means. These pieces may be produced by a shredder installation (not shown) and supplied continuously or in batches to the hopper 1, from which they are transported on a first conveyor belt 2 to a hammer mill 3, configured to crush the lumped material into crush material of about 3 mm to 5 cm in diameter. Preferably the crushed material is smaller than about 10 mm in diameter. The term 'diameter' is used for indicating the size of the material even though the material pieces are not necessarily spherical in the geometrical sense when regarded on a microscopic scale. On a macroscopic scale however, the material pieces resemble a sphere sufficiently closely so that the diameter can be determined with an accuracy in the order of millimetres (for example, a piece of 5mm in diameter can be distinguished from a piece of 8 mm in diameter). It is preferred that the minimum size is not too small, so as to avoid that fibers would be exposed and/or milled down significantly before entering into a micronizing apparatus.

The hammer mill 3 may be any type of apparatus known in the art and suitable for crushing the lumped material pieces of waste fiber cement material into crushed material of the above-stated size. As illustrated in the drawing, the hammer mill 3 may comprise rotating hammer arms 4 and a sieve 5 that allows granules to pass through the sieve depending on their size. The hammer mill 3 is represented in a very simplified way, but its functioning is well known to the skilled person and need therefore not be described here in detail.

The pieces of the lumped material are still large enough to contain fibers embedded in a solid cement matrix, i.e. the fibers have not been separated from the cement at this stage.

From the hammer mill 3, the crushed material is transported by a second conveyor belt 6 to a micronizing apparatus 10. As shown in the drawing, this apparatus is of a particular type comprising a vertical roller mill in milling chamber 9 and an air classifier 14. The air classifier is arranged at a top of the milling chamber 9. It may include a separate chamber in which a separate is achieved by means of centrifugal forces The shown vertical roller mill comprises a horizontally placed rotatable table 11 and a plurality of rollers 12 positioned so that a lateral surface of the rollers faces a grinding track 13 on the table 11. Preferably the lateral surface of the rollers 12 is a conical surface as shown in the drawing. The rollers 12 are actively rotated about their respective rotation axes and pressed against the rotating table 11, while the material is supplied to the spaces between the rollers 12 and the rotating grinding track 13, to thereby further crush the granules into smaller particles. Mounted above the rotors is an air classifier 14. In the illustrated embodiment, the air classifier 14 comprises a ventilator 15 and separation blades (not shown in detail). Not shown are air inlets at a bottom side of the milling chamber 9 through which air is pushed into the milling chamber to generate an upwards air flow. An outlet duct 17 is coupled to the outlet 16.

In the grinding portion of the vertical roller mill 10, the crushed material is ground between the rollers 12 and the grinding track 13 so that cementitious particles are formed. These particles may be 'micrometer sized'. The term 'micrometre sized' refers to the fact that these particles can be regarded as spheres on a microscopic scale with an accuracy in the order of micrometres, i.e. particles of diameter 20 $\mu$m are distinguishable from particles of diameter 25$\mu$m, 30$\mu$m or 40$\mu$m.

When these particles have diameters as small as 100 $\mu$m or less, they separate from the fibers, the majority of which have a length of about 800 to 2000 $\mu$m when embedded in the cement matrix. The size reduction of the particles is more profound than the reduction of the fiber length. It is understood that grinding in the vertical roller mill results in the formation of agglomerates of fibers and cementitious particles, i.e. material held together by means of capillary forces and/or other physical attraction.

A stream of the ground material is then lifted up out of the grinding area by the upward air flow and passes through the blades of the air classifier 14. During said lifting up, the ground material is dried. Due to said drying, said capillary forces and other physical bonding between fibers and particles will diminish. Hence, the ground material, i.e. said agglomerates, may fall apart. It is not excluded that interaction with the air classifier helps to achieve such separation.

The classifier is configured to allow only the separate fibers and lighter, finer particles to pass through the blades while coarser particles fall back to the grinding area. Said finer particles largely correspond to the fraction of particles having diameters of less than 200 $\mu$m or less, for instance about 100 $\mu$m or less, i.e. the particles which are essentially free of embedded fibers. The larger particles are grinded again until they too are broken up into smaller particles that separate from the fibers. The mixture of fibers and particles passing through the outlet 16 and into the outlet tube 17 is therefore a mixture that is formed for the most part of unbroken fibers and micrometre-sized cementitious particles.

The sieving step takes place in a sieve 20 comprising a mesh 21 with openings designed to retain the fibers and allow the cementitious particles of diameter 100 $\mu$m or less to pass through the mesh and fall through an exit duct 22 from where the particles can be collected as the end product of the method. The mesh openings may for example be circular or equivalent, having a diameter in the order of 60 $\mu$m to 200 $\mu$m. According to further embodiments, the mesh diameter is in the range between 50$\mu$m and 150$\mu$m. According to a specific embodiment, the mesh diameter is about 100$\mu$m. The sieve 20 may be any type of sieve capable of performing the sieving step as described above. It could for example be a tumbling sieve. It may further be an ultrasonic sieve.

The fact that a majority of the fibers have not been broken up in the grinding area of the roller/classifier mill 10 enables the use of a sieve having the above-identified mesh openings which would not be able to retain a sufficient amount of fiber material if the majority of the fibers is broken up. This is believed to be a key contributor to the ability of the method and installation of the invention to reach superior results in terms of the fiber content in the final product collected in the outlet duct 22 of the sieve 20.

Said final product is a cementitious powder formed of particles having diameters of about 100 $\mu$m or less and with a fiber concentration of less than 2wt%, as defined by means of the organic carbon content. According to a first embodiment, the fiber concentration is between 1 and 1.9wt%, or between 1.2 and 1.9wt% or between 1.2 and 1.8wt% or between 1.3 and 1.7wt% or less than 1.5wt% or less than 1.4wt% (all as defined by the organic carbon content). Determination of organic carbon content is achieved by removal of any inorganic carbon by means of treatment with a sufficiently strong acid, such as phosphoric acid. Thereafter the sample is dried, oxidized and combusted, wherein the flow of $CO_2$ is measured using a non-dispersive infrared detection cell.

The low fiber content enables the use of the powder as a resource for producing new cement or fiber cement products, in other words it enables the full recycling of the original waste products.

According to preferred embodiments, the cementitious particles obtained in the vertical mill are dried before or during their transport to the classifier 14, by heating the mill 10. This may be done by heating the upward air flow that transports the particles towards the classifier 14. According to a preferred embodiment, the mill is heated to a temperature between 70°C and 90°C. This may be realized by heating the air flow to a temperature of about 200°C.

Besides the temperature in the milling chamber 9, the optimization of a number of other parameters has been proven to be beneficial in terms of minimizing the fiber content and obtaining suitably sized particles in the end product. These parameters include the mechanical pressure exerted on the rollers, the supply rate of the millimetre-sized granules into the roller/classifier mill 10, and the air flow velocity in the mill 10.

The method of the invention may be performed as a continuous process, wherein a continuous supply of waste products undergoes the various steps consecutively. This mode is illustrated in Figure 1. Alternatively, the method may be performed in batch mode, wherein a batch of waste products is processed according to each method step, with the end product of each step being transported as a batch of material to the next step.

In the embodiment shown in Figure 1, the installation further comprises a hammer mill 3 or any equivalent tool capable of performing the same reduction of lumped material pieces of fiber cement waste material to crushed material.

The transport of products from one component to another need not be realized by conveyor belts as shown, but could be done by any other suitable transport means. The installation could additionally include a shredder placed upstream of the hammer mill 3.

According to an embodiment of the method, a colour separation step is added upstream of the micronizing apparatus, i.e. the colour separation is performed on the crushed material. The colour separation step may include a separation tool known as such, for example a tool using a camera system. A corresponding embodiment of the installation of the invention includes said colour separation tool between the hammer mill 3 or its equivalent and the micronizing apparatus 10.

Example 1

Cementitious powders obtained with the specified method have been characterized. Table 1 shows test data obtained with waste material for autoclave-cured fiber cement products. The waste material was cutting waste generated during production of autoclave-cured fiber cement products commercialized by Eternit NV under the trade name tectiva™. The material was treated by means of the micronizing apparatus as described with reference to Figure 1 hereinabove. The crushed material had a particle size below 5 mm. The material was treated with a vertical roller mill to a size of less than 100 $\mu$m. For sake of experiment, samples were taken without sieving, with a sieve of 100 $\mu$m mesh and with a sieve of 150 $\mu$m mesh. The sieve was an air jet sieve without use of ultrasonic system. Organic carbon content and bulk density were measured using standard method. The particle size distribution was measured using laser diffraction with a Malvern Mastersizer 3000 apparatus.

Table 1

|  |  | Before sieving | After sieving using a 150$\mu$m sieve | After sieving using a 100$\mu$m sieve |
|---|---|---|---|---|
| $C_m$ org (m%) |  | 3.03 | 2.01 | 1.29 |
| Loose Bulk density (g/dm$^3$) |  | 516 | 544 | 567 |
| PSDA | D90 ($\mu$m) | 93.3 | 63.0 | 47.1 |
|  | D75 ($\mu$m) | 40.2 | 33.9 | 29.2 |
|  | D50 ($\mu$m) | 19.0 | 16.9 | 15.2 |
|  | D25 ($\mu$m) | 7.1 | 6.7 | 6.1 |
|  | D10 ($\mu$m) | 2.1 | 2.0 | 1.8 |

It is apparent from the data in this table that the sieving has a significant impact on the organic carbon content. Moreover, the sieve with a mesh of 100 $\mu$m results in a significantly lower organic carbon content than that with the sieve of 150 $\mu$m.

It is furthermore visible that the resulting particle size distribution is concentrated in the range between 2 and 63 $\mu$m (D10 and D90 limits). In the shown example, the median (D50) is between 15 and 20 micrometers. In other examples wherein the crushed material had a somewhat larger size and another vertical roller mill was used, a distribution was obtained, with a D10 of 2.4 $\mu$m, a D50 of 24 $\mu$m and a D75 between 55 and 60 $\mu$m and a D90 in the range of 110-140 $\mu$m, using a sieve of 150 $\mu$m.

Example 2

Table 2 shows test results for air-cured cementitious powder. The fiber cement waste material was cutting waste from a fiber cement panel commercialized under the name Natura by Eternit NV. Sieving was performed with a sieve with a mesh of 150 $\mu$m.

Table 2

|  |  | Before sieving | After sieving using a 150$\mu$m sieve |
|---|---|---|---|
| $C_m$ org (m%) |  | 2.05 | 1.30 |
| PSDA | D90 ($\mu$m) | 181.0 | 93.5 |
|  | D75 ($\mu$m) | 86.2 | 52.2 |
|  | D50 ($\mu$m) | 35.6 | 21.7 |
|  | D25 ($\mu$m) | 10.5 | 7.0 |
|  | D10 ($\mu$m) | 3.1 | 2.2 |

The same trends as perceived for the autoclave-cured material are visible in this table as well. The organic carbon content strongly reduces by sieving, and the particle size distribution ranges from 2 $\mu$m (D10) to a 93 $\mu$m (D90), thus somewhat below 100 $\mu$m. The median is at 22 $\mu$m.

Example 3

Test were performed to determine the average fiber length in samples after sieving. Herein, the material sieving through a 150$\mu$m sieve was used. This material comprising both fibers and inorganic powder was treated in a Resch Vibratory Sieve Shaker during 5 minutes. In the apparatus, sieves of 150 $\mu$m, 100 $\mu$m and 75 $\mu$m were used. On each sieve, a fibre-rich layer was generated on top of the inorganic powder. Thereafter, the fibre-rich layers were removed from the inorganic powder and were combined into one fiber sample. The removed fiber sample still comprises inorganic powder. This contamination is however sufficiently small so that it does not hamper or disturb operation of the measurement apparatus. It was observed that the fibre-rich layer was thickest on the 150 $\mu$m sieve and thinnest on the 75 $\mu$m sieve.

The average fiber length was thereafter determined for the separated fibres by means of a Valmet FS5 apparatus, which is a fiber image analyzer for automated fiber measurements. This apparatus comprises a camera using UHD (ultra-high density) image resolution, which is also marketed as 4K resolution having a resolution of 4096 x 2160 pixels. The fiber length is measured by the apparatus in accordance with the ISO 16065-2 standard, hence using unpolarized light.

The measured fiber length can be specified in different ways. A distinction is to be made between the arithmetic average length of fibre L(n), as can be obtained by optical microscopy, and the length weight average fiber length L(i), as often used in the wood pulp industry. Herein:

$$L(n) = \sum(ni \, *li) / \sum(ni) \qquad (1)$$

$$L(i) = \sum([li*ni]*li)/\sum [li* ni] \qquad (2).$$

The ratio of the two different average fiber length (L(i)/L(n)) is the polydispersity, and a measure of the broadness of the length distribution.

The average fiber length was determined for the cementitious powders obtained after sieving through a 150$\mu$m sieve in accordance with Example 1 and Example 2 (Samples 1 and 2 respectively). It was furthermore determined for another cementitious powder obtained from autoclave-cured production waste (Sample 3) and for a reference sample. This reference sample was a fresh cellulose mixture for use in an autoclave-curable fiber cement composition.

Results are shown in Table 3

Table 3

| Sample | Curing technology | L(n) (mm) | L(i) (mm) | L(i)/L(n) |
|---|---|---|---|---|
| 1 | Autoclave-cured | 0.33 | 0.38 | 1.15 |
| 2 | Air-cured | 0.40 | 0.46 | 1.15 |
| 3 | Autoclave-cured | 0.33 | 0.38 | 1.15 |
| Ref | None | 0.88 | 1.54 | 1.75 |

The material of sample 3 was sieved over a 150$\mu$m sieve, a 100$\mu$m sieve and a 75$\mu$m sieve. Results thereof are shown in Table 4

Table 4

| Sample | Sieve size | L(n) (mm) | L(i) (mm) | L(i)/L(n) |
|---|---|---|---|---|
| 3(1) | 75 $\mu$m | 0.28 | 0.30 | 1.07 |
| 3(2) | 100 $\mu$m | 0.37 | 0.40 | 1.08 |
| 3(3) | 150 $\mu$m | 0.51 | 0.56 | 1.10 |

From the results in Table 3 it can be derived that the fibers in the cementitious powder have an arithmetic average length L(n) in the range of 0.30 mm to 0.45 mm, a length weight average length L(i) in the range of 0.35 mm to 0.50 mm, and a polydispersity L(i)/L(n) in the range of 1.10-1.20. It is apparent that the average fiber length is well above the 150 $\mu$m sieving.

In comparison to the fresh fibers, the average length is clearly much shorter. In fact, taking account thereof that approximately one third of the fiber weight is removed and that the fiber length is reduced to 30-50%, such as 35-40% (0.33/0.88 = 0.375), the overall number of fibers in the cementitious powder per unit of mass will be larger than the number of fibers in the waste material (or the fresh material).

Furthermore, the polydispersity is reduced in comparison to a sample of fresh cellulose fibers. The low polydispersity is an indicator that the fibers have not been pulverized. Moreover, this low polydispersity is an indicator that the cementitious powder is useful for reuse into a variety of cementitious products such as fiber cement products, concrete, mortars and as in cement material. Due to the comparatively short length of the fibres, the cementitious powder is well dispersible. This is important, so that a fiber cement composition may comprise a sufficiently high amounf of cementitious powder, such as for instance at least 15%. As apparent from Example 4, a fiber cement product made in a Hatschek process with a composition comprising 15% by weight of such cementitious powder (with reduced amount of cement and silica compared to a reference) has higher IMOR and dMOR compared to a reference. It furthermore has increased E-modulus compared to the sample comprising cementitious powder from waste fiber cement material that has not been sieved.

Example 4

Further tests were performed using the cementitious powder as characterized in Table 1. This material was added into a slurry for manufacturing fiber cement. The slurry composition was in accordance with the tectiva plate, with the exception that the amount of Portland cement and silica were reduced and 15% of the cementitious powder was added. The other ingredients were kept the same. The ingredients are shown in Table 5. The indicated amounts are based on dry weight. The test was performed with a composition without any recycling material, with a composition that was merely milled and with a composition that was both milled and sieved, using a 150 $\mu$m mesh sieve.

Table 5 - compositions

| | Reference | Without sieving | With sieving (150$\mu$m) |
|---|---|---|---|
| Cement (m%) | 33.8 | 26.3 | 26.3 |
| Silica (m%) | 35.4 | 27.9 | 27.9 |
| Recycled material (m%) | 0 | 15.0 | 15.0 |
| Cellulose fibers (m%) | 7.6 | 7.6 | 7.6 |

(continued)

|  | Reference | Without sieving | With sieving (150μm) |
|---|---|---|---|
| Other mineral ingredients (m%) | 19.5 | 19.5 | 19.5 |
| Pigment (iron oxide) (m%) | 3.6 | 3.6 | 3.6 |

The slurry was used to manufacture fiber cement sheets using the Hatschek process, using a pilot line (MiniHatschek). The resulting panels had 20 films with a total thickness of 8 mm. They were pressed with a pressure of 230 kg/m$^2$ during 10 minutes.

Precuring was performed at room temperature overnight. Subsequently, the panels were cured in an autoclave equipment at 170°C during 12 hours.

The resulting panels were thereafter tested to identify mechanical properties as well as chemical composition, i.e. the organic content and the amount of tobermorite.

Table 6 - test results, *determined under air-dry conditions, after drying to 40 °C 3 days, m% is mass percentage based on dry weight of the composition.

|  | Reference | Without sieving | With sieving (150μm) |
|---|---|---|---|
| $C_{organic}$ (m%) | 2.80 | 3.31 | 3.17 |
| E-modulus (MPa)* | $16.5.10^3$ | $12.6.10^3$ | $15.1.10^3$ |
| dLOP (mm)* | 0.82 | 0.76 | 0.95 |
| SLOP (MPa)* | 25.6 | 20.4 | 25.5 |
| dMOR (mm)* | 1.14 | 1.33 | 1.25 |
| SMOR (MPa)* | 31.6 | 29.8 | 30.0 |
| iMOR (J/m$^2$)* | 556 | 601 | 588 |
| Density (g/cm$^3$)* | 1.60 | 1.50 | 1.50 |
| Moisture content (%)* | 3.45 | 2.12 | 2.08 |
| MOR/d$^2$* | 12.36 | 13.30 | 13.33 |
| Tobermorite content (m%) | 17.5 | 24.6 | 25.7 |

The test results show that the organic carbon content increases relative to the fresh product. However, the content is lower for the sieved sample than for the sample without sieving. The total organic carbon content is higher than 2%, in view of the addition of fresh cellulose fibers.

The density of the product reduces due to the addition of the recycled cementitious powder. It has to be taken into account, however, that the amount of fresh cement in the samples with recycled powder is lower. Since the density of cement is higher than that of recycled cementitious powder (which contains around one third cement), this is not a surprise.

The tobermorite content turns out to increase significantly, for 17% up to about 25%. This is clearly an addition of the recycled fiber cement. The increase is more than expected based on the addition of 15% cementitious powder. It is believed that the presence of tobermorite in the cementitious powder may act as nucleating agent for the generation of tobermorite during the autoclave curing.

The shown mechanical properties were determined under air-dry conditions. The SLOP is herein the strength value at the limit of proportionality between the strain and the material expansion. Above this value, deformation will be irreversible, therewith damaging the material. The SMOR is the flexural strength determined as the modulus of rupture. The dLOP and the dMOR define the bending at the conditions of SLOP and SMOR. The iMOR is the fracture energy. The MOR/d$^2$ is the normalized flexural strength, wherein the SMOR is divided by the square of the density.

It is apparent from Table 6, that the removal of fibers brings the elastic properties (i.e. the elastic modulus and the SLOP) of the product to levels corresponding to the fresh product without any recycled material. This is a beneficial result from the removal of fibers. The dMOR and the iMOR increase relative to fresh material, and the humidity content decreases. The SMOR value decreases slightly (a few percent). However, the normalized flexural strength increases, due to the lower density.

**Claims**

1. A cementitious powder comprising organic fibers in an amount of from 1 to 2% by weight as defined by an organic carbon content, wherein

   said cementitious powder is a cured powder comprising calcium hydroxide and/or calcium silicate hydrates (CSH) in an amount of at least 5% by weight, and
   said cementitious powder provided with a particle size distribution such that at least 90 % by weight (d90) is smaller 100 $\mu$m, a median (d50) is in the range of 10-40 $\mu$m, and
   said organic fibers have an arithmetic average length (*L(n)*) in the range of 0.25 mm to 0.50 mm, preferably in the range of 0.30 mm to 0.45 mm.

2. The cementitious powder as claimed in claim 1, wherein said organic fibers have a polydispersity in the range of 1.05-1.25, preferably 1.10-1.20.

3. The cementitious powder as claimed in any of the claims 1-2, wherein the cured powder comprises calcium hydroxide and/or calcium silicate hydrates (CSH) in an amount of at least 10% by weight.

4. The cementitious powder as claimed in any of the claims 1-3, wherein said organic fibers comprise cellulose fibers.

5. The cementitious powder as claimed in claim 1-4, wherein said calcium silicate hydrate comprises tobermorite.

6. The cementitious powder as claimed in claim 1-5, wherein said organic fibers further comprise synthetic fibers.

7. The cementitious powder as claimed in any of the claims 1-6, wherein said calcium silicate hydrate comprises calcium silicate hydrate gel.

8. The cementitious powder as claimed in any of the preceding claims, wherein the median (d50) is in the range of 15-35 $\mu$m, more preferably 20-30 $\mu$m.

9. The cementitious powder as claimed in any of the preceding claims, being obtainable from the method as claimed in claim 10-12.

10. A method of preparation of a cementitious powder as claimed in any of the preceding claims, comprising the steps of:

    - Providing fiber cement waste material comprising fibers;
    - Comminuting said fiber cement waste material resulting in cementitious particles and fibers, and
    - Removing part of said fibers from said comminuted fiber cement waste material by sieving.

11. The method as claimed in claim 10, wherein said comminution step comprises use of a roller mill, such as a vertical roller mill, provided with an air classifier.

12. The method as claimed in claim 11, further comprising a drying step of waste material ground in the vertical roller mill before passing the air classifier, wherein preferably said drying is performed by means of a heated air flow in a milling chamber in which the vertical roller mill and the air classifier are located.

13. Use of the cementitious powder as claimed in any of the claims 1-9 for the manufacture of fiber cement or concrete, wherein the cementitious powder is preferably used in an amount of at least 7 weight% based on dry weight, more preferably at least 10 weight%, more preferably at least 15 weight%, for instance in the range of 15-40 weight%.

**Patentansprüche**

1. Ein zementhaltiges Pulver, das organische Fasern in einer Menge von 1 bis 2 Gew.-% enthält, definiert durch einen organischen Kohlenstoffgehalt, wobei das zementartige Pulver ein ausgehärtetes Pulver ist, das Calciumhydroxid und/oder Calciumsilikathydrate (CSH) in einer Menge von mindestens 5 Gew.-% enthält, und das zementartige Pulver eine Partikelgrößenverteilung aufweist, sodass mindestens 90 Gew.-% (d90) kleiner als 100 $\mu$m sind, der Medianwert (d50) im Bereich von 10-40 $\mu$m liegt und die organischen Fasern eine arithmetische Durchschnittslänge (L(n)) im Bereich von 0,25 mm bis 0,50 mm, vorzugsweise im Bereich von 0,30 mm bis 0,45 mm aufweisen.

2. Zementhaltiges Pulver nach Anspruch 1, wobei die organischen Fasern eine Polydispersität im Bereich von 1,05-1,25, vorzugsweise 1,10-1,20, aufweisen.

3. Zementhaltiges Pulver nach einem der Ansprüche 1-2, wobei das ausgehärtete Pulver Calciumhydroxid und/oder Calciumsilikathydrate (CSH) in einer Menge von mindestens 10 Gew.-% enthält.

4. Zementhaltiges Pulver nach einem der Ansprüche 1-3, wobei die organischen Fasern Zellulosefasern enthalten.

5. Zementhaltiges Pulver nach Anspruch 1-4, wobei das Calciumsilikathydrat Tobermorit enthält.

6. Zementhaltiges Pulver nach Anspruch 1-5, wobei die organischen Fasern zusätzlich synthetische Fasern enthalten.

7. Zementhaltiges Pulver nach einem der Ansprüche 1-6, wobei das Calciumsilikathydrat Calciumsilikathydratgel enthält.

8. Zementhaltiges Pulver nach einem der vorhergehenden Ansprüche, wobei der Medianwert (d50) im Bereich von 15-35 $\mu$m, vorzugsweise 20-30 $\mu$m, liegt.

9. Zementhaltiges Pulver nach einem der vorhergehenden Ansprüche, erhältlich nach dem Verfahren gemäß den Ansprüchen 10-12.

10. Verfahren zur Herstellung eines zementhaltigen Pulvers nach einem der vorhergehenden Ansprüche, umfassend die folgenden Schritte:

   - Bereitstellung von faserhaltigem Faserzementabfallmaterial;
   - Zerkleinern des Faserzementabfallmaterials zu zementartigen Partikeln und Fasern und
   - Entfernen eines Teils der Fasern aus dem zerkleinerten Faserzementabfallmaterial durch Sieben.

11. Verfahren nach Anspruch 10, wobei der Zerkleinerungsschritt die Verwendung einer Walzenmühle, wie z.B. einer Vertikalwalzenmühle, mit Windsichter umfasst.

12. Verfahren nach Anspruch 11, das ferner einen Trocknungsschritt des in der Vertikalwalzenmühle gemahlenen Abfallmaterials vor dem Passieren des Windsichters umfasst. Vorzugsweise erfolgt die Trocknung mittels eines erwärmten Luftstroms in einer Mahlkammer, in der sich die Vertikalwalzenmühle und der Windsichter befinden.

13. Verwendung des zementhaltigen Pulvers nach einem der Ansprüche 1-9 zur Herstellung von Faserzement oder Beton, wobei das zementhaltigen Pulver vorzugsweise in einer Menge von mindestens 7 Gew.-%, bezogen auf das Trockengewicht, vorzugsweise mindestens 10 Gew.-%, insbesondere mindestens 15 Gew.-%, beispielsweise im Bereich von 15-40 Gew.-%, verwendet wird.

**Revendications**

1. Poudre cimentaire comprenant des fibres organiques en une quantité de 1 à 2 % en poids, telle que définie par la teneur en carbone organique, dans laquelle ladite poudre cimentaire est une poudre durcie comprenant de l'hydroxyde de calcium et/ou des silicates de calcium hydrates (CSH) en une quantité d'au moins 5 % en poids, et ladite poudre cimentaire présente une distribution granulométrique telle qu'au moins 90 % en poids (d90) est inférieur à 100 $\mu$m, une médiane (d50) est comprise entre 10 et 40 $\mu$m, et lesdites fibres organiques ont une longueur moyenne arithmétique (L(n)) comprise entre 0,25 mm et 0,50 mm, de préférence entre 0,30 mm et 0,45 mm.

2. Poudre cimentaire selon la revendication 1, dans laquelle lesdites fibres organiques présentent une polydispersité comprise entre 1,05 et 1,25, de préférence entre 1,10 et 1,20.

3. Poudre cimentaire selon l'une quelconque des revendications 1 et 2, dans laquelle la poudre durcie comprend de l'hydroxyde de calcium et/ou des silicates de calcium hydratés (CSH) en une quantité d'au moins 10 % en poids.

**4.** Poudre cimentaire selon l'une quelconque des revendications 1 à 3, dans laquelle lesdites fibres organiques comprennent des fibres de cellulose.

**5.** Poudre cimentaire selon les revendications 1 à 4, dans laquelle ledit silicate de calcium hydraté comprend de la tobermorite.

**6.** Poudre cimentaire selon les revendications 1 à 5, dans laquelle lesdites fibres organiques comprennent en outre des fibres synthétiques.

**7.** Poudre cimentaire selon l'une quelconque des revendications 1 à 6, dans laquelle ledit silicate de calcium hydraté comprend un gel de silicate de calcium hydraté.

**8.** Poudre cimentaire selon l'une quelconque des revendications précédentes, dont la médiane (d50) est comprise entre 15 et 35 $\mu$m, de préférence entre 20 et 30 $\mu$m.

**9.** Poudre cimentaire selon l'une quelconque des revendications précédentes, pouvant être obtenue par le procédé selon les revendications 10 à 12.

**10.** Procédé de préparation d'une poudre cimentaire selon l'une quelconque des revendications précédentes, comprenant les étapes suivantes :

- Fourniture de déchets de fibrociment comprenant des fibres ;
- Fragmentation desdits déchets de fibrociment pour obtenir des particules de ciment et des fibres ; et
- Élimination d'une partie desdites fibres desdits déchets de fibrociment broyé par tamisage.

**11.** Procédé selon la revendication 10, dans lequel l'étape de broyage comprend l'utilisation d'un broyeur à cylindres, tel qu'un broyeur à cylindres vertical, équipé d'un classificateur à air.

**12.** Procédé selon la revendication 11, comprenant en outre une étape de séchage des déchets broyés dans le broyeur vertical avant leur passage dans le classificateur à air, le séchage étant de préférence effectué au moyen d'un flux d'air chauffé dans une chambre de broyage où se trouvent le broyeur à cylindres vertical et le classificateur à air.

**13.** Utilisation de la poudre cimentaire selon l'une quelconque des revendications 1 à 9 pour la fabrication de fibrociment ou de béton, dans laquelle la poudre cimentaire étant de préférence utilisée en une quantité d'au moins 7 % en poids par rapport au poids sec, plus préférablement d'au moins 10 % en poids , plus préférablement d'au moins 15 % en poids, par exemple entre 15 à 40 % en poids.

FIG 1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002273258 A
- JP 2004217482 A

- JP 2006023624 A